# EUROPEAN PATENT APPLICATION

(11) **EP 4 583 267 A1**
(43) Date of publication of application: **09.07.2025**
(21) Application number: 22959153.2
(22) Date of filing: 22.09.2022
(51) Int. Cl.: H01M 50/186, H01M 50/105

(54) **SECONDARY BATTERY AND ELECTRONIC APPARATUS COMPRISING SAME**

(71) Applicant: Ningde Amperex Technology Limited, Ningde, Fujian 352100 (CN)
(72) Inventor: SONG, Zhengju, Ningde, Fujian 352100 (CN); LI, Lin, Ningde, Fujian 352100 (CN); GUO, Peipei, Ningde, Fujian 352100 (CN); LI, Rui, Ningde, Fujian 352100 (CN)
(74) Representative: Icosa
(86) International application number: PCT/CN2022/120612
(87) International publication number: WO 2024/060145

(57) **Abstract**

A secondary battery is provided, including an electrode assembly (10), a tab assembly, and a packaging pouch (40). The electrode assembly (10) is accommodated in the packaging pouch (40). The packaging pouch (40) includes a sealing portion (420), the tab assembly includes tabs (20) and insulating adhesives (30), and the tabs (20) are connected to the electrode assembly (10) and run through the sealing portion (420) to extend out of the packaging pouch (40). The insulating adhesives (30) are disposed on the tabs (20) and connect the tabs (20) and the packaging pouch (40). The insulating adhesive (30) includes a first insulating adhesive layer (31), a second insulating adhesive layer (32), and a third insulating adhesive layer (33) sequentially stacked in a first direction, the first insulating adhesive layer (31) is connected to the tab (20), and the third insulating adhesive layer (33) is connected to the packaging pouch (40). In a second direction perpendicular to the first direction, the insulating adhesive (30) includes a first part (303), where the first part (303) is a region where at which the insulating adhesive (30) overlaps the tab (20) in the first direction and is not overlap the sealing portion (420). The first part (303) includes a first end portion (303a), and the first end portion (303a) is located in the packaging pouch. In the first end portion (303a), in the first direction, a thickness of the insulating adhesive (30) is h1, a thickness of the first insulating adhesive layer (31) is A1, a thickness of the second insulating adhesive layer (32) is B1, and a thickness of the third insulating adhesive layer (33) is C1, where 10.5%h1≤B1≤35%h1, 90%B1≤C1≤500%B1, C1>A1, and 60%B1≤A1≤400%B1.

## Description

### TECHNICAL FIELD

This application relates to the field of energy storage apparatuses, and in particular, to a secondary battery and an electronic apparatus including such battery.

### BACKGROUND

Lithium-ion secondary batteries have been widely used in the fields such as electrical energy storage, portable electronic devices, and electric vehicles, due to their characteristics such as high energy density, long cycle life, high nominal voltage, low self-discharge rate, small volume, and light weight. To ensure the safety performance of secondary batteries, lithium-ion secondary batteries, before leaving factory, need to be subjected to a series of tests, including an internal short-circuit test, a drop test, a puncture test, and the like. The drop test is a stringent safety test for lithium-ion secondary batteries. After drop, issues such as a top seal being burst open and electrolyte leakage are likely to occur at tabs of a lithium-ion secondary battery. Currently, insulating adhesives are typically applied at tab sealing positions to improve the sealing effect. However, the sealing effect between the existing insulating adhesives and the housing still needs improvement.

### SUMMARY

An objective of this application is to provide a secondary battery that can enhance sealing strength at tabs, and an electronic apparatus including such secondary battery.

A first aspect of this application provides a secondary battery, including an electrode assembly, a tab assembly, and a packaging pouch. The electrode assembly is accommodated in the packaging pouch. The packaging pouch includes a sealing portion, the tab assembly includes tabs and insulating adhesives respectively disposed on two sides of each tab, and the tabs are connected to the electrode assembly and run through the sealing portion to extend out of the packaging pouch. The insulating adhesives connect the tabs and the packaging pouch. The insulating adhesive includes a first insulating adhesive layer, a second insulating adhesive layer, and a third insulating adhesive layer sequentially stacked in a first direction, the first insulating adhesive layer is connected to the tab, and the third insulating adhesive layer is connected to the packaging pouch. In a second direction perpendicular to the first direction, the insulating adhesive includes a first part, where the first part is a region where at which the insulating adhesive overlaps the tab in the first direction and is not overlap the sealing portion. In the first end portion, in the first direction, a thickness of the insulating adhesive is h1, a thickness of the first insulating adhesive layer is A1, a thickness of the second insulating adhesive layer is B1, and a thickness of the third insulating adhesive layer is C1, where 10.5%h1≤B1≤35%h1, 90%B1≤C1≤500%B1, C1>A1, and 60%B1≤A1≤400%B1.

In the secondary battery provided in this application, 10.5%h1≤B1≤35%h1 ensures that the second insulating adhesive layer does not over-melt or insufficiently fuse during heat sealing, preventing interfaces and delamination between the second insulating adhesive layer and the first insulating adhesive layer as well as the third insulating adhesive layer, thereby preventing sealing strength reduction. 90%B1≤C1≤500%B1, 60%B1≤A1≤400%B1, and C1>A1 ensure that the third insulating adhesive layer can fully fuse with the packaging pouch, and the first insulating adhesive layer can fuse to be bonded to the tab. The third insulating adhesive layer is heated to melt before the first insulating adhesive layer during sealing. This design can prevent the third insulation adhesive layer from over-melting, where such over-melting causes fusion between the packaging pouch and the second insulation adhesive layer, thereby avoiding poor fusion interfaces, and can also prevent poor bonding with the tab caused by the first insulating adhesive layer fusing insufficiently or over-melting. In addition, the first insulating adhesive layer, the second insulating adhesive layer, and the third insulating adhesive layer are asymmetrical in thickness. With the use of this three-layer structure with asymmetrical thickness, during sealing, the insulating adhesive and the packaging pouch can fully fuse without noticeable interfaces, thereby enhancing the sealing strength between the insulating adhesive and the packaging pouch, improving the sealing effect, and reducing a risk of electrolyte leakage.

According to some embodiments of this application, 8.18A1≥C1≥1.05A1, and a sealing tensile force is greater than or equal to 5.75 N. As the thickness of the third insulating adhesive layer increases, the sealing tensile force after sealing increases and a resulting secondary battery 100 is less prone to electrolyte leakage. In a case of 8.18A1<C1, insufficient melting and interface issues occur between the third insulating adhesive layer, the sealing layer, and the second insulating adhesive layer during sealing, reducing the sealing tensile force and increasing the risk of electrolyte leakage in the secondary battery 100. Preferably, 7A1≥C1≥1.3A1. Within this range, the sealing tensile force is greater than or equal to 6.2 N, such that the resulting secondary battery 100 after sealing is less prone to electrolyte leakage.

According to some embodiments of this application, the thickness of the tab in the first direction is t, where 3t≥2h1≥0.9t.

According to some embodiments of this application, in the second direction, the insulating adhesive further includes a second part, and the second part is a region at which the insulating adhesive overlaps the sealing portion in the first direction. In the second part, the insulating adhesive includes a second part of first insulating adhesive layer, a second part of second insulating adhesive layer, and a second part of third insulating adhesive layer sequentially stacked in the first direction, and in the first direction, thicknesses of the second part of first insulating adhesive layer, the second part of second insulating adhesive layer, and the second part of third insulating adhesive layer are A2, B2, and C2, respectively.

According to some embodiments of this application, in the second part, a thickness of the second part of third insulating adhesive layer in the first direction is C2, and 92%C1≤C2≤98%C1.

According to some embodiments of this application, 7 µm≥C1-C2≥1 µm.

According to some embodiments of this application, the packaging pouch includes a sealing layer connected to the third insulating adhesive layer, and a thickness of the sealing layer in the first direction is P; and in the second part, a total thickness of the second part of third insulating adhesive layer and the sealing layer in the first direction is H, where 0.25(C2+P)≤H≤0.75(C2+P).

According to some embodiments of this application, 0.4(C2+P)≤H≤0.7(C2+P).

According to some embodiments of this application, in the second part, a thickness of the second part of first insulating adhesive layer in the first direction is A2, and A1 and A2 satisfy the following formula: 5 µm≥A1-A2≥0.5 µm.

According to some embodiments of this application, in the second part, a thickness of the second part of second insulating adhesive layer in the first direction is B2, and B1 and B2 satisfy the following formula: 3 µm≥B1-B2≥0.1 µm.

According to some embodiments of this application, the packaging pouch includes a sealing layer connected to the third insulating adhesive layer, and in the first direction, a thickness of the packaging pouch is T and a thickness of the sealing layer is P; and in the first direction, a thickness of a part of the tab assembly corresponding to the second part is G and a thickness of a part of the secondary battery corresponding to the second part and the tab is K, where 2T+G-(2P+2t)×75%<K<2T+G-(2P+2t)×15%.

According to some embodiments of this application, in the second direction, the insulating adhesive further includes a third part; the third part is a region at which the insulating adhesive does not overlap the sealing portion or the tab in the first direction; and in the third part, in the first direction, the insulating adhesive includes a third part of first insulating adhesive layer, a third part of second insulating adhesive layer, and a third part of third insulating adhesive layer sequentially stacked in the first direction. A thickness of the insulating adhesive is h3, a thickness of the first insulating adhesive layer is A3, a thickness of the second insulating adhesive layer is B3, and a thickness of the third insulating adhesive layer is C3, where 10.5%h3≤B3≤35%h3, C3>A3, 90%B3≤C3≤500%B3, and 60%B3≤A3≤400%B3.

According to some embodiments of this application, the tab assembly includes a bonding region, and the bonding region is a part at which the insulating adhesives on two sides of the tab adhere to each other in the first direction; and in the first direction, the bonding region includes a bonding region first insulating adhesive bonding layer, a bonding region second insulating adhesive layer, and a bonding region third insulating adhesive layer, a thickness of the bonding region is Q, a thickness of the bonding region first insulating adhesive bonding layer is D, a thickness of the bonding region second insulating adhesive layer is B4, and a thickness of the bonding region third insulating adhesive layer is C4, where 10.5%(Q×0.5)≤B4≤35%(Q×0.5), C4>0.5D, 90%B4≤C4≤500%B4, and 120%B4≤D≤800%B4.

According to some embodiments of this application, melting points of the first insulating adhesive layer and the third insulating adhesive layer are 100-140°C, and a melting point of the second insulating adhesive layer is 140-200°C.

According to some embodiments of this application, the first insulating adhesive layer, the second insulating adhesive layer, and the third insulating adhesive layer may each include one or more of polypropylene, polyethylene, poly(vinylidene difluoride), vinylidene fluoride-hexafluoropropylene copolymer, polymethyl methacrylate, or polyethylene glycol.

According to some embodiments of this application, the first insulating adhesive layer and/or the third insulating adhesive layer further includes a toughening modifier.

According to some embodiments of this application, the toughening modifier includes one or more of ethylene propylene rubber, ethylene propylene diene monomer rubber, styrene-butadiene rubber, low-density polyethylene, ethylene-vinyl acetate copolymer, linear low-density polyethylene, nylon, polyethylene terephthalate, polycarbonate, or ultra-high-molecular-weight polyethylene.

According to some embodiments of this application, based on a total mass of the first insulating adhesive layer, a percentage of the toughening modifier is 3%-10%; and/or based on a total mass of the third insulating adhesive layer, a percentage of the toughening modifier is 3%-10%.

According to some embodiments of this application, h1 is 30-160 µm.

A second aspect of this application provides an electronic apparatus, including the foregoing secondary battery.

### BRIEF DESCRIPTION OF DRAWINGS

The above and/or additional aspects and advantages of this application will become obvious and easy to understand from the description of some embodiments with reference to the following accompanying drawings.
FIG. 1 is a schematic diagram of a secondary battery according to an embodiment of this application;
FIG. 2 is a schematic sectional view of the battery shown in FIG. 1 along II-II;
FIG. 3 is a schematic sectional view of a sealing film according to an embodiment of this application;
FIG. 4 is a schematic sectional view of an insulating adhesive according to an embodiment of this application; and
FIG. 5 is a schematic diagram of an electronic apparatus according to an embodiment of this application.

### Reference signs of main components:

| | |
|---|---|
| Secondary battery | 100 |
| Electrode assembly | 10. |
| Packaging pouch | 40 |
| Tab | 20 |
| Insulating adhesive | 30 |
| First sealing film | 41 |
| Second sealing film | 42 |
| Accommodating cavity | 410 |
| Sealing portion | 420 |
| Third part | 301 |
| Second part | 302 |
| First part | 303 |
| Sealing layer | 401 |
| Metal layer | 402 |
| Protective layer | 403 |
| First end portion | 303a |
| Second end portion | 303b |
| First insulating adhesive layer | 31 |
| Second insulating adhesive layer | 32 |
| Third insulating adhesive layer | 33 |
| Bonding region | 201 |
| Electronic apparatus | 200 |
| Main body | 210 |

### DETAILED DESCRIPTION

The following clearly and detailly describes the technical solutions in some embodiments of this application. Apparently, the described embodiments are some rather than all embodiments of this application. Unless otherwise defined, all technical and scientific terms used herein shall have the same meanings as commonly understood by persons skilled in the art to which this application belongs. The terms used in the specification of this application are merely intended to describe specific embodiments rather than to limit this application.

The following describes some embodiments of this application in detail. However, this application may be embodied in many different implementations and should not be construed as being limited to the example embodiments set forth herein. Rather, these example embodiments are provided such that this application can be conveyed to persons skilled in the art thoroughly and in detail.

In addition, in the accompanying drawings, sizes or thicknesses of various components and layers may be exaggerated for brevity and clarity. Throughout the text, the same numerical values represent the same elements. As used herein, the term "and/or" includes any and all combinations of one or more associated items listed. In addition, it should be understood that when an element A is referred to as being "connected to" an element B, the element A may be directly connected to the element B, or an intervening element C may be present there between such that the element A and the element B are indirectly connected to each other.

Further, the use of "may" for describing embodiments of this application relates to "one or more embodiments of this application."

The technical terms used herein are merely intended to describe specific embodiments rather than to limit this application. As used herein, the singular forms are intended to include the plural forms as well, unless otherwise clearly indicated in the context. It should be further understood that the term "include" used in this specification indicates the presence of stated features, numerical values, steps, operations, elements, and/or components but does not preclude the presence or addition of one or more other features, numerical values, steps, operations, elements, components, and/or combinations thereof.

Spatial related terms such as "above" may be used herein for ease of description to describe the relationship between one element or feature and another element (a plurality of elements) or feature (a plurality of features) as illustrated in the figure. It should be understood that the spatial related terms are intended to include different directions of a device or an apparatus in use or operation in addition to the directions described in the figures. For example, if the device in the figures is turned over, elements described as "over" or "above" other elements or features would then be oriented "beneath" or "below" the other elements or features. Thus, the example term "above" may include both directions of above and below. It should be understood that although the terms first, second, third, and the like may be used herein to describe various elements, components, regions, layers, and/or portions, these elements, components, regions, layers, and/or portions should not be limited by these terms. These terms are used to distinguish one element, component, region, layer, or portion from another element, component, region, layer, or portion. Therefore, the first element, component, region, layer, or portion discussed below may be referred to as the second element, component, region, layer, or portion without departing from the teachings of the example embodiments.

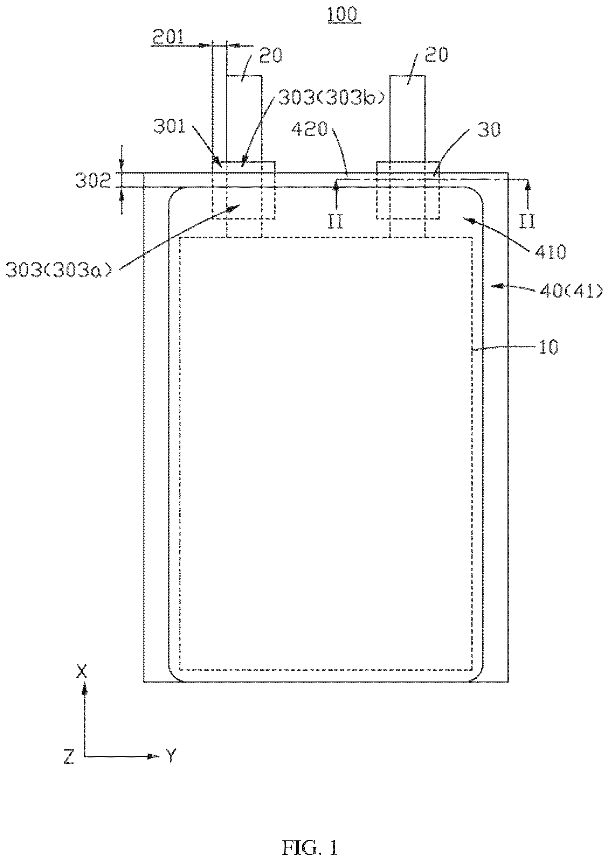

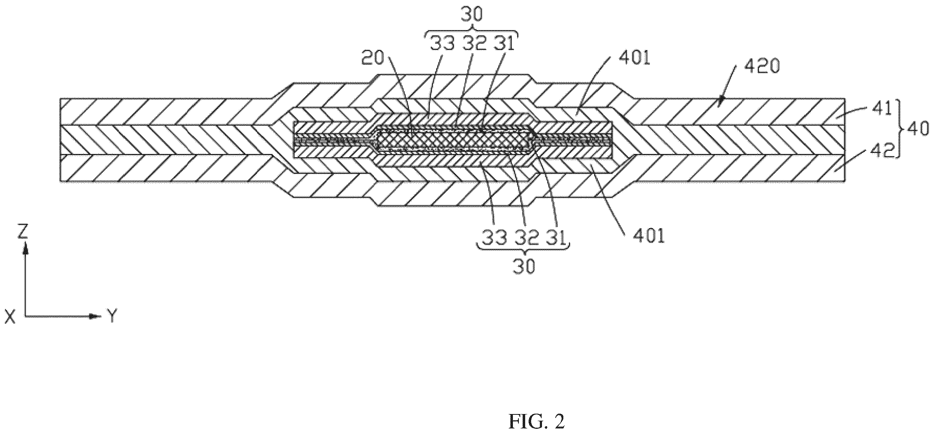

Referring to FIG. 1 and FIG. 2, an embodiment of this application provides a secondary battery 100, including an electrode assembly 10, a tab assembly, and a packaging pouch 40. The tab assembly includes tabs 20 and two insulating adhesives 30 respectively disposed on two sides of each tab. The tabs 20 are connected to the electrode assembly 10. The packaging pouch 40 covers the electrode assembly 10 and part of the tab 20, and the insulating adhesive 30 is disposed between the packaging pouch 40 and the tab 20 and connects the packaging pouch 40 and the tab 20. In this embodiment, two tabs 20 are provided, namely a positive tab and a negative tab. The two tabs 20 are located on the same side of the secondary battery 100 and extend out of the packaging pouch 40. Four insulating adhesives 30 are provided, where two insulating adhesives 30 are disposed on two opposite surfaces of one tab 20, the other two insulating adhesives 30 are disposed on two opposite surfaces of the other tab 20, and the two insulating adhesives 30 on the same side of the two tabs 20 are spaced apart. A material of the positive tab may include at least one of Ni, Ti, Al, Ag, Au, Pt, Fe, or a composition thereof. A material of the negative tab may include at least one of Ni, Ti, Cu, Ag, Au, Pt, Fe, or a composition thereof. In other embodiments, the two insulating adhesives 30 on the same side of the two tabs 20 may be connected to form a whole, and the two tabs 20 may be alternatively located on different sides of the secondary battery 100.

The electrode assembly 10 includes a positive electrode plate, a negative electrode plate, and a separator configured between the positive electrode plate and the negative electrode plate. The electrode assembly 10 is formed by laminating or winding the positive electrode plate, the separator, and the negative electrode plate. The positive electrode plate and the negative electrode plate are electrically connected to the two tabs 20, respectively.

The packaging pouch 40 includes a first sealing film 41 and a second sealing film 42 opposite each other, and a shape of the first sealing film 41 matches a shape of the second sealing film 42. The first sealing film 41 and the second sealing film 42 are connected to each other and enclose an accommodating cavity 410, and the accommodating cavity 410 is used for accommodating an electrolyte, the electrode assembly 10, the tabs 20, and at least part of the insulating adhesive 30. Edges of the first sealing film 41 and the second sealing film 42 are connected to form a sealing portion 420, and the sealing portion 420 extends from an outer side surface of the accommodating cavity 410 towards a side back away from the accommodating cavity 410. The sealing portion 420 is part of the packaging pouch 40 that is sealed through a hot pressing process after the electrode assembly 10 and the electrolyte are accommodated therein. The tab 20 is partially accommodated in the accommodating cavity 410 and runs through the sealing portion 420 to extend out of the packaging pouch 40.

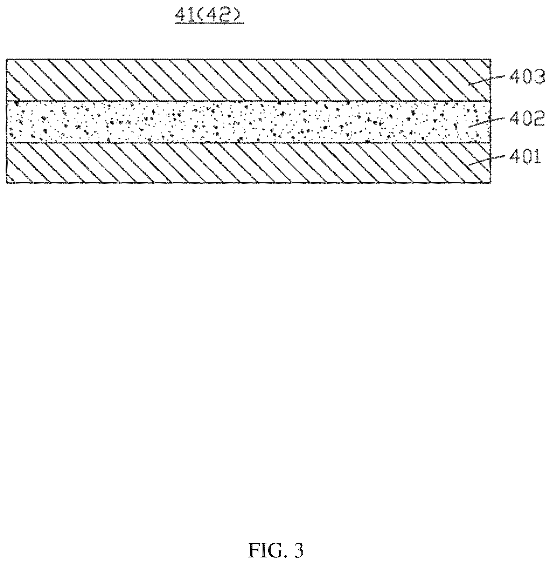

Referring to FIG. 2 and FIG. 3, the first sealing film 41 and the second sealing film 42 each include a sealing layer 401, a metal layer 402, and a protective layer 403 sequentially stacked in first direction Z. The sealing layer 401 is closer to the electrode assembly 10 and the protective layer 403 is farther from the electrode assembly 10. A material of the sealing layer 401 is a polymer, such as polypropylene or polyamide. The sealing layers 401 of the first sealing film 41 and the second sealing film 42 are connected to seal the packaging pouch 40, preventing the packaging pouch 40 from being dissolved by an organic solvent in the electrolyte or swelling. The sealing layer 401 is further configured to prevent the metal layer 402 from corrosion caused by an electrolytic salt in the electrolyte coming into contact with the metal layer 402. The material of the protective layer 403 is a polymer resin, which is used to protect the metal layer 402, preventing damage to the metal layer 402 caused by action of an external force. This resin also prevents air from the external environment from penetrating, maintaining the interior of the secondary battery 100 in a water-free and oxygen-free environment. The material of the metal layer 402 is metal, such as aluminum or steel, which is used to prevent moisture from the external environment from penetrating and to protect the secondary battery 100 from damage caused by the external force. When the packaging pouch 40 is used to package the secondary battery 100, the sealing films can be folded, and then a heat-sealing head is used to perform heat sealing on surfaces of the folded sealing films under pressure (0.3-0.6 MPa) at a certain temperature (180-215°C) for a certain time (1.5-3s), allowing the sealing layers 401 of the sealing films to melt to be connected. In addition, the innermost layer of the packaging pouch 40 is the sealing layer 401.

Referring to FIG. 1, in second direction X, the insulating adhesive 30 includes a first part 303, a third part 301, and a second part 302 that are connected to each other. The first part 303 is a region at which the insulating adhesive 30 overlaps the tab 20 in the first direction Z and is not overlap the sealing portion 420. The third part 301 is a region at which the insulating adhesive 30 does not overlap the tab 20 or the sealing portion 420 in the first direction Z. The second part 302 is a region at which the insulating adhesive 30 overlaps the sealing portion 420 in the first direction Z. The second direction X is perpendicular to the first direction Z. In this embodiment, the first direction Z is the thickness direction of the tab 20, and the second direction X is the length direction of the tab 20.

In this embodiment, the first part 303 includes a first end portion 303a located in the packaging pouch 40 and a second end portion 303b located outside the packaging pouch 40. The insulating adhesive 30 includes four third parts 301 distributed at four corner positions. Two of the third parts 301 are located in the packaging pouch 40 and on two sides of the first end portion 303a in third direction Y, while the other two third parts 301 are located outside the packaging pouch 40 and on two sides of the second end portion 303b in the third direction Y. The third direction Y is perpendicular to both the first direction Z and the second direction X. In this embodiment, the third direction Y is the width direction of the tab 20. With the arrangement of the third part 301 and the first part 303, the insulating adhesive 30 extends inward from the sealing portion 420 into the accommodating cavity 410 to avoid a risk of an effective sealing width being narrowed because the insulating adhesive 30 does not extend inward from the sealing portion 420 into the packaging pouch 40; and the insulating adhesive 30 extends outward from the sealing portion 420 to the outside of the packaging pouch 40, to avoid the risk of the edge of the packaging pouch 40 being pressed empty during sealing, facilitating sealing.

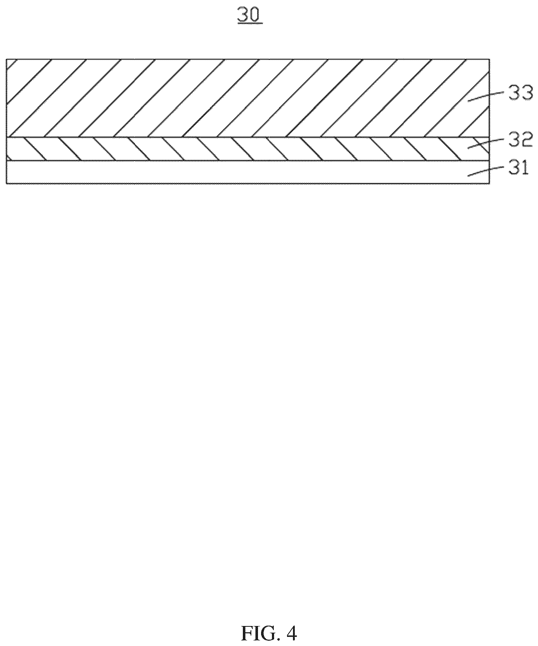

Referring to FIG. 2 and FIG. 4, in the first direction Z, the insulating adhesive 30 includes a first insulating adhesive layer 31, a second insulating adhesive layer 32, and a third insulating adhesive layer 33 sequentially stacked. The first insulating adhesive layer 31 is connected to the tab 20, and the third insulating adhesive layer 33 is connected to the sealing layer 401 of the packaging pouch 40. The first insulating adhesive layer 31 and the third insulating adhesive layer 33 serve a sealing function, and the second insulating adhesive layer 32 serves a supporting function to prevent the insulating adhesive 30 from over-melting and causing short circuit.

In the present invention, the first part 303, the third part 301, and the second part 302 each include the first insulating adhesive layer 31, the second insulating adhesive layer 32, and the third insulating adhesive layer 33. The thicknesses of the first insulating adhesive layer 31, the second insulating adhesive layer 32, and the third insulating adhesive layer 33 before sealing are approximately equal. The insulating adhesive is named differently based on the region at which it is located. In the first part 301, the insulating adhesive includes the first insulating adhesive layer 31, the second insulating adhesive layer 32, and the third insulating adhesive layer 33. In the second part 302, the insulating adhesive includes a second part of first insulating adhesive layer 31, a second part of second insulating adhesive layer 32, and a second part of third insulating adhesive layer 33. In the third part 301, the insulating adhesive includes a third part of first insulating adhesive layer 31, a third part of second insulating adhesive layer 32, and a third part of third insulating adhesive layer 33. Because the first end portion 303a included in the first part 303 does not heat-melt during sealing, the thicknesses of the first insulating adhesive layer 31, the second insulating adhesive layer 32, and the third insulating adhesive layer 33 of the first end portion 303a are approximately equal to the thicknesses of the first insulating adhesive layer 31, the second insulating adhesive layer 32, and the third insulating adhesive layer 33 of the insulating adhesive 30 before sealing.

The tab assembly further includes a bonding region 201, and the bonding region 201 is a part at which the insulating adhesives 30 on two sides of the tab 20 adhere to each other in the first direction Z. The bonding region 201 is formed by the second part 302 and the third part 301 of the insulating adhesive 30 located on the same side of the tab 20 in the third direction Y. In the bonding region 201, the first insulating adhesive layers 31 of the two insulating adhesives 30 are bonded to form a first insulating adhesive bonding layer.

In some embodiments, melting points of the first insulating adhesive layer 31 and the third insulating adhesive layer 33 are 100-140°C, and a melting point of the second insulating adhesive layer 32 is 140-200°C. The first insulating adhesive layer 31, the second insulating adhesive layer 32, and the third insulating adhesive layer 33 may each include one or more of polypropylene (PP), polyethylene, poly(vinylidene difluoride), vinylidene fluoride-hexafluoropropylene copolymer, polymethyl methacrylate, or polyethylene glycol.

In some embodiments, the first insulating adhesive layer 31 and/or the third insulating adhesive layer 33 also includes a toughening modifier, which is used to improve flexibility and impact performance, thereby enhancing the sealing strength between the insulating adhesive 30 and the packaging pouch 40. The toughening modifier may include rubber particles such as ethylene propylene rubber (EPR), ethylene propylene diene monomer (EPDM) rubber, or styrene-butadiene rubber, to prevent crack propagation. The toughening modifier may further include one or more of flexible polymer, rigid polymer, or ultra-high-molecular-weight polyethylene (UHMWPE) to enhance connection between crystals, making the grain boundaries blurred. The flexible polymer may include low-density polyethylene (LDPE), ethylene-vinyl acetate copolymer (EVA), linear low-density polyethylene (LLDPE), or the like. The rigid polymer may include nylon (PA6), polyethylene terephthalate (PET), polycarbonate (PC), or the like.

In some embodiments, the toughening modifier is ultra-high-molecular-weight polyethylene, and a percentage of the toughening modifier added in the first insulating adhesive layer 31 and/or the third insulating adhesive layer 33 is 3%-10%. When the percentage of the toughening modifier added is 3%-10%, the sealing strength between the insulating adhesive 30 and the packaging pouch 40 is high. When the percentage of the toughening modifier added is excessive (greater than 10%), the crystals form separate entities, leading to a delamination phenomenon.

In the first end portion 303a and the second end portion 303b, in the first direction Z, a thickness of the insulating adhesive 30 is h1, a thickness of the first insulating adhesive layer 31 is A1, a thickness of the second insulating adhesive layer 32 is B1, and a thickness of the third insulating adhesive layer 33 is C1, where h1=A1+B1+C1, 10.5%h1≤B1≤35%h1, 90%B1≤C1≤500%B1, C1>A1, and 60%B1≤A1≤400%B1.

In the secondary battery provided in this application, 10.5%h1≤B1≤35%h1 ensures that the second insulating adhesive layer does not over-melt or insufficiently fuse during heat sealing, preventing interfaces and delamination between the second insulating adhesive layer and the first insulating adhesive layer 31 as well as the third insulating adhesive layer 33, thereby preventing sealing strength reduction. 90%B1≤C1≤500%B1, 60%B1≤A1≤400%B1, and C1>A1 ensure that the third insulating adhesive layer 33 can fully fuse with the packaging pouch 40, and the first insulating adhesive layer 31 can fuse to be bonded to the tab 20. The third insulating adhesive layer 33 is heated to melt before the first insulating adhesive layer during sealing. This design can prevent the third insulation adhesive layer 33 from over-melting, where such over-melting causes fusion between the packaging pouch 40 and the second insulation adhesive layer 32, thereby avoiding poor fusion interfaces, and can also prevent poor bonding with the tab 20 caused by the first insulating adhesive layer 31 fusing insufficiently or over-melting. In addition, the first insulating adhesive layer 31, the second insulating adhesive layer 32, and the third insulating adhesive layer 33 are asymmetrical in thickness. With the use of this three-layer structure with asymmetrical thickness, during sealing, the insulating adhesive 30 and the packaging pouch 40 can fully fuse without noticeable interfaces, thereby enhancing the sealing strength between the insulating adhesive 30 and the packaging pouch 40, improving the sealing effect, and reducing a risk of electrolyte leakage.

According to some embodiments of this application, 8.18A1≥C1≥1.05A1, and when the thickness C1 of the third insulating adhesive layer 33 is within the above range, the secondary battery 100 can have high sealing strength, high insulation, and corrosion resistance. As the thickness of the third insulating adhesive layer 33 increases, the secondary battery 100 has increased sealing tensile force after sealing and is less prone to electrolyte leakage. However, if the thickness of the third insulating adhesive layer 33 exceeds a certain range, insufficient melting and interface issues occur between the third insulating adhesive layer 33, the sealing layer 401, and the second insulating adhesive layer 32 during sealing, reducing the sealing tensile force and increasing the risk of electrolyte leakage in the secondary battery 100. When the thickness C1 of the third insulating adhesive layer 33 is within the above range, the secondary battery 100 can have high sealing strength, high insulation, and corrosion resistance. Preferably, 7A1≥C1≥1.3A1. Within this range, the sealing tensile force is greater than or equal to 6.2 N, such that the resulting secondary battery 100 after sealing is less prone to electrolyte leakage.

The thickness of the tab 20 in the first direction Z is t. In some embodiments, t and h1 satisfy the following formula: 3t≥2h1≥0.9t. With such arrangement, the secondary battery 100 can have high sealing strength, high insulation, and corrosion resistance.

In the second part 302, in the first direction Z, a thickness of the second part of first insulating adhesive layer 31 is A2, a thickness of the second part of second insulating adhesive layer 32 is B2, and a thickness of the second part of third insulating adhesive layer 33 is C2. In some embodiments, 92%C1≤C2≤98%C1. Such arrangement allows for a small thickness change of the second part of third insulating adhesive layer 33 before and after heat sealing, helping to enhance the sealing strength. In some embodiments, 7 µm≥C1-C2≥1 µm, 5 µm≥A1-A2≥0.5 µm, and 3 µm≥B1-B2≥0.1 µm.

A thickness of the sealing layer 401 in the first direction Z is P. In the second part 302, the sealing layer 401 of the packaging pouch 40 and the second part of third insulating adhesive layer 33 of the insulating adhesive 30 melt together due to heat sealing. The total thickness of the sealing layer 401 and the second part of third insulating adhesive layer 33 in the first direction Z is H. In some embodiments, 0.25(C1+P)<H<0.75(C1+P). Such arrangement ensures that the sealing layer 401 of the packaging pouch 40 and the second part of third insulating adhesive layer 33 of the insulating adhesive 30 fully fuse, enhancing the sealing strength. Preferably, 0.29(C1+P)<H<0.5(C1+P).

In some embodiments, in the first direction Z, a thickness of a part of the tab assembly corresponding to the second part 302 of the insulating adhesive 30 is G. A thickness of the packaging pouch 40 in the first direction Z is T. In this application, the thicknesses of the first sealing film 41 and the second sealing film 42 in the first direction Z are both T. In the first direction Z, the thickness of a part of the secondary battery 100 corresponding to the tab 20 and the second part 302 is K, where 2T+G-(2P+2t)×75%<K<2T+G-(2P+2t)×15%.

In the third part 301, in the first direction Z, a thickness of the insulating adhesive 30 is h3, a thickness of the third part of first insulating adhesive layer 31 is A3, a thickness of the third part of second insulating adhesive layer 32 is B3, and a thickness of the third part of third insulating adhesive layer 33 is C3, where h3=A3+B3+C3, 10.5%h3≤B3≤35%h3, 90%B3≤C3≤500%B3, C3>A3, and 60%B3≤A3≤400%B3. In the third part 301, C3>A3 ensures that the third part of third insulating adhesive layer 33 can fully fuse with the sealing layer 401 of the packaging pouch 40. The third part of third insulating adhesive layer 33 is heated to melt before the third part of first insulating adhesive layer 31 during sealing. This design can prevent the third part of third insulating adhesive layer 33 from over-melting, where such over-melting causes fusion between the sealing layer 401 and the third part of second insulating adhesive layer 32, thereby avoiding poor fusion interfaces. Additionally, the third part of first insulating adhesive layer 31, the third part of second insulating adhesive layer 32, and the third part of third insulating adhesive layer 33 are asymmetrical in thickness. With the use of this three-layer structure with asymmetrical thickness, during sealing, the insulating adhesive 30 can fully fuse with the sealing layer 401 of the packaging pouch 40 without any noticeable interfaces, thereby enhancing the sealing strength between the insulating adhesive 30 and the packaging pouch 40 and improving the sealing effect.

In the bonding region 201, in the first direction Z, a thickness of the bonding region 201 is Q, a thickness of a bonding region first insulating adhesive bonding layer is D, a thickness of a bonding region second insulating adhesive layer 32 is B4, and a thickness of a bonding region third insulating adhesive layer 33 is C4, where 10.5%(Q×0.5)≤B4≤35%(Q×0.5), C4>0.5D, 90%B4≤C4≤500%B4, and 120%B4≤D≤800%B4.

In the secondary battery provided in this application, 10.5%(Q×0.5)≤B4≤35%(Q×0.5) ensures that the second part of second insulating adhesive layer does not over-melt or insufficiently fuse during heat sealing, preventing interfaces and delamination between the second part of second insulating adhesive layer and the second part of first insulating adhesive layer 31 as well as the second part of third insulating adhesive layer 33, thereby preventing sealing strength reduction. C4>0.5D, 90%B4≤C4≤500%B4, and 120%B4≤D≤800%B4 ensure that the second part of third insulating adhesive layer 33 can fully fuse with the packaging pouch 40, and the second part of first insulating adhesive layer 31 can fuse to be bonded to the tab 20. The second part of third insulating adhesive layer 33 is heated to melt before the second part of first insulating adhesive layer during sealing. The design can prevent the second part of third insulating adhesive layer 33 from over-melting, where such over-melting causes fusion between the packaging pouch 40 and the second part of second insulating adhesive layer 32, thereby avoiding poor fusion interfaces, and can also prevent the second part of first insulating adhesive layer 31 from insufficiently fusing or over-melting that causes poor bonding with the tab 20. The second part of first insulating adhesive layer 31, the second part of second insulating adhesive layer 32, and the second part of third insulating adhesive layer 33 are asymmetrical in thickness. With the use of this three-layer structure with asymmetrical thickness, during sealing, the insulating adhesive 30 and the packaging pouch 40 can fully fuse without noticeable interfaces, thereby enhancing the sealing strength between the insulating adhesive 30 and the packaging pouch 40, improving the sealing effect, and reducing the risk of electrolyte leakage.

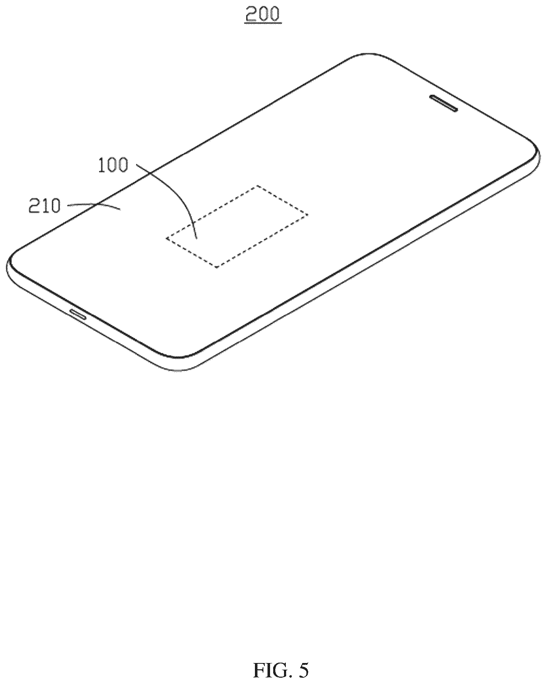

Referring to FIG. 5, an embodiment of this application provides an electronic apparatus 200, and the electronic apparatus 200 includes a main body 220 and a secondary battery 100. The secondary battery 100 is accommodated in the main body 220. The electronic apparatus 200 may be one of a mobile phone, a tablet, or an e-reader.

In this application, taking the electronic apparatus 200 being a mobile phone as an example, the secondary battery 100 is disposed in the mobile phone to provide power for the mobile phone for use, and the main body 220 is of a structure of the mobile phone. It can be understood that in other embodiments, the electronic apparatus 200 may alternatively be of other structures, and is not limited to the above mobile phone, tablet, or e-reader.

The following describes the performance of the battery provided in this application through specific examples and comparative examples.

Insulating adhesives 30 with a thickness h1 of 80 µm, and aluminum and nickel strips of 5×0.1 mm were subjected to hot-melt flat pressing to form a tab assembly as shown in FIG. 1, where an overhang width of the insulating adhesive 30 was 2.2 mm, and a distance between two insulating adhesives 30 on the same side of the tab 20 was 20 mm. The overhang width of the insulating adhesive 30 was a distance by which a side edge of the insulating adhesive 30 extended beyond an edge of the tab on the same side along third direction Y (the width direction of the tab 20).

The above tab assembly was placed into a packaging pouch 40 with a thickness T of 91 µm, and then heat-sealed using a heat-sealing head of 1.5 mm width, to obtain the secondary battery as shown in FIG. 1, where a heat-sealing temperature was 205°C, a heat-sealing pressure was 0.4 MPa, and a heat-sealing time was 1.5S.

For the secondary battery, cutting was performed along the width direction or length direction of the tab 20 to obtain samples, and cross-sections of the samples were tested using a "Keyence" VHX-5000 model microscope (with a magnification of 200X). Thicknesses of 5 to 10 points distributed uniformly in each of regions of the samples (a first insulating adhesive layer 31, a second insulating adhesive layer 32, a third insulating adhesive layer 33, a first insulating adhesive bonding layer, a tab assembly, a sealing layer 401, and a packaging pouch 40) were measured and recorded, and an average value was taken as the thickness of each layer. In the first direction, due to heat-sealing, boundaries between some components were blurred, and to assist in measuring the thickness of each component, an auxiliary line might be drawn based on the color difference between the components. The first insulating adhesive bonding layer was formed by bonding two first insulating adhesive layers together, and half of the thickness of the first insulating adhesive bonding layer could be considered as the thickness of the first insulating adhesive layer.

In a first part 303, a thickness A1 of the first insulating adhesive layer 31 was 14.8 µm, a thickness B1 of the second insulating adhesive layer 32 was 15.6 µm, and a thickness C1 of the third insulating adhesive layer 33 was 49.6 µm, where B1=19.5%h1, A1=94.87%B, and C1=317.95%B. A thickness t of the tab 20 was 100 µm. In a second part 302, a thickness C2 of a second part of third insulating adhesive layer 33 was 48.6 µm, a total thickness H of the second part of third insulating adhesive layer 33 and the sealing layer 401 was 38.7 µm, a thickness A2 of a second part of first insulating adhesive layer 31 was 14.9 µm, and a thickness B2 of a second part of second insulating adhesive layer 32 was 14.8 µm. A thickness G of a part of the tab assembly corresponding to the second part 302 of the insulating adhesive 30 was 260 µm, a thickness P of the sealing layer 401 was 35 µm, and a thickness K of a part of the secondary battery 100 corresponding to the tab 20 and the second part 302 was 360 µm. In a third part 301, a thickness h3 of an insulating adhesive 30 was 80 µm, a thickness A3 of a third part of first insulating adhesive layer 31 was 14.8 µm, a thickness B3 of a third part of second insulating adhesive layer 32 was 15.6 µm, and a thickness C3 of a third part of third insulating adhesive layer 33 was 49.6 µm. In a bonding region 201 of the tab assembly, a thickness Q of the tab assembly was 160 µm, a thickness D of a bonding region first insulating adhesive bonding layer was 29.6 µm, a thickness B4 of a bonding region second insulating adhesive layer 32 was 15.6 µm, and a thickness C4 of a bonding region third insulating adhesive layer 33 was 49.6 µm.

A material of the first insulating adhesive layer 31 was PP, with a melting point of 145°C. The material of the second insulating adhesive layer 32 was PP, with a melting point of 145°C. The third insulating adhesive layer 33 included PP with a mass percentage of 95% and UHMWPE with a mass percentage of 5%, with a melting point of 120°C.

The resulting battery in Example 1 was subjected to a packaging tensile test, and whether the battery experienced electrolyte leakage was visually checked. The packaging tensile test was specifically as follows: Part of the battery corresponding to the tab and the second part of the insulating adhesive was cut in the width direction of the tab, to obtain a sample with a width of 5 mm and a length of 5 cm. The sample was clamped on a high-speed tensile machine, where the tab was fixed on an upper fixture and the packaging pouch was fixed on a lower fixture, with a stretching speed set to 175±5 mm/min. The sample was lifted upward in the 180-degree direction to be peeled off, and a peeling force was read. A value of the read peeling force (measured in N) was divided by a width of the sample, so as to calculate a sealing tensile force F (N/mm) of the sample.

Examples 2-12 and Comparative examples 1-9 differ from Example 1 in the thickness A1 of the first insulating adhesive layer 31, the thickness B1 of the second insulating adhesive layer 32, and the thickness C1 of the third insulating adhesive layer 33 in the first part 303 of the insulating adhesive 30. The specific parameters and test results are shown in Table 1.

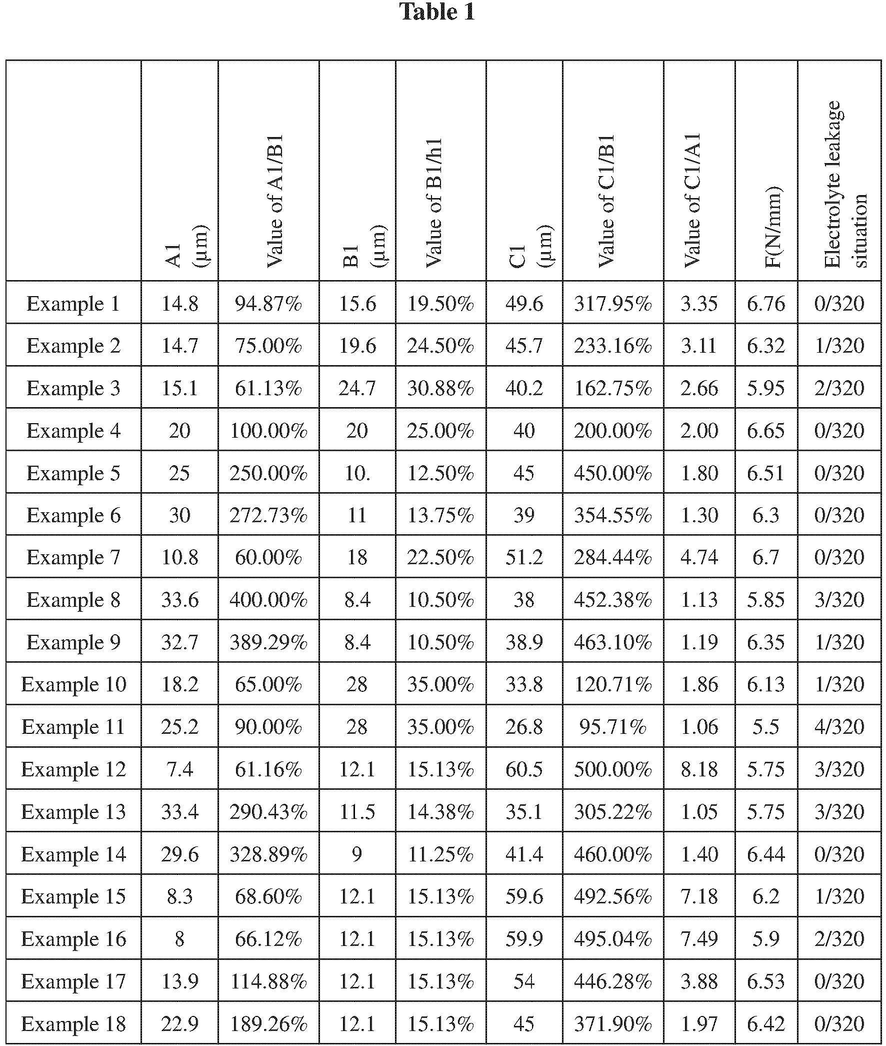

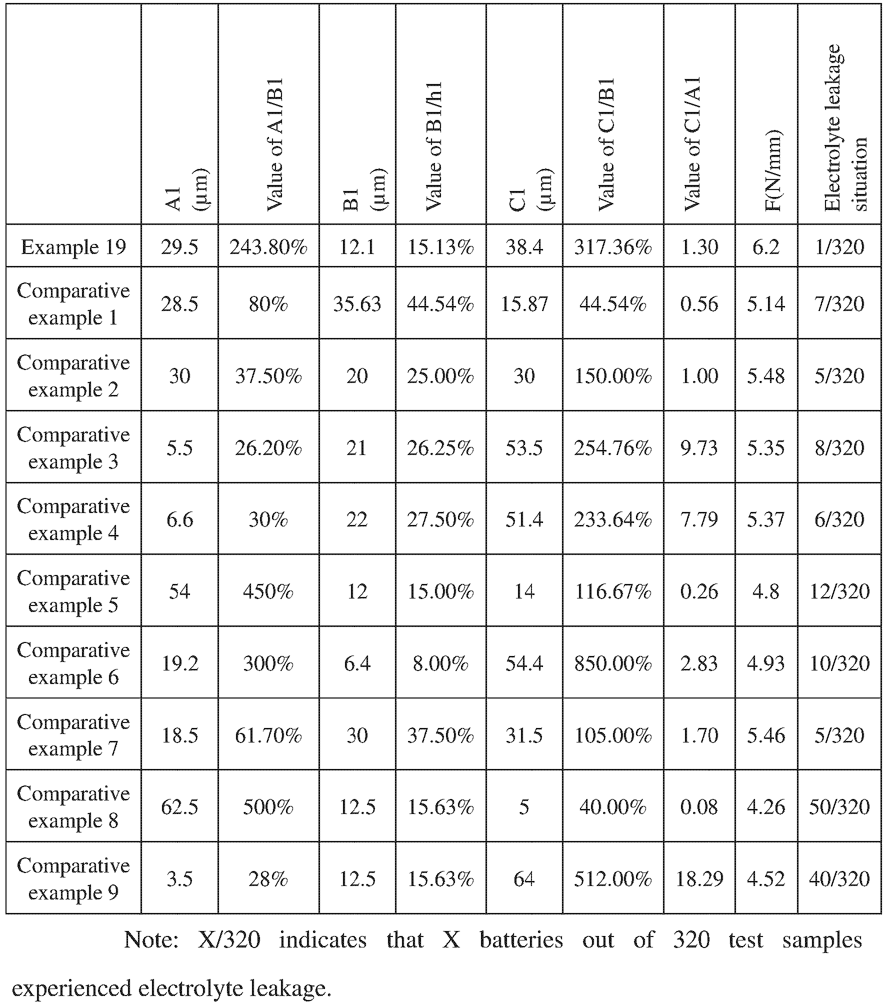

Based on comparison between Examples 1-14 and Comparative examples 1-9, it can be known that when the insulating adhesive simultaneously satisfies 10.5%h1≤B1≤35%h1, 90%B1≤C1≤500%B1, C1>A1, 60%B1≤A1≤400%B1, the sealing tensile force F is greater than or equal to 5.5 N/mm, and the electrolyte leakage situation of the battery is reduced.

Based on comparison between Examples 12 and 15-19, it can be known that 8.18A1≥C1≥1.05A1, within this range, the sealing tensile force is greater than or equal to 5.75 N, and when the thickness C1 of the third insulating adhesive layer 33 is within the above range, the secondary battery 100 can have high sealing strength, high insulation, and corrosion resistance. As the thickness of the third insulating adhesive layer 33 increases, the secondary battery 100 has increased sealing tensile force after sealing and is less prone to electrolyte leakage. However, if the thickness of the third insulating adhesive layer 33 exceeds a certain range, insufficient melting and interface issues occur between the third insulating adhesive layer 33, the sealing layer 401, and the second insulating adhesive layer 32 during sealing, reducing the sealing tensile force and increasing the risk of electrolyte leakage in the secondary battery 100. When the thickness C1 of the third insulating adhesive layer 33 is within the above range, the secondary battery 100 can have high sealing strength, high insulation, and corrosion resistance. Preferably, 7A1≥C1≥1.3A1. Within this range, the sealing tensile force is greater than or equal to 6.1N, such that the resulting secondary battery 100 after sealing is less prone to electrolyte leakage.

Examples 20-23 and Comparative examples 10 and 11 differ from Example 1 in the thickness t of the tab 20. Specific parameters and test results are shown in Table 2.

**Table 2**

| | h1 (µm) | t (µm) | Value of 2h1/t | F(N/mm) | Electrolyte leakage situation |
|---|---|---|---|---|---|
| Example 1 | 80 | 100 | 1.6 | 6.76 | 0/320 |
| Example 20 | 80 | 145 | 0.9 | 6.35 | 0/320 |
| Example 21 | 80 | 125 | 1.28 | 6.57 | 0/320 |
| Example 22 | 80 | 53.3 | 3 | 5.5 | 4/320 |
| Example 23 | 80 | 58 | 2.76 | 6.35 | 0/320 |
| Comparative example 10 | 80 | 45 | 3.56 | 5.2 | 8/320 |
| Comparative example 11 | 80 | 200 | 0.8 | 6.2 | 2/320 |

From Table 2, it can be known that the sealing tensile force F increases with the increase in the value of 2h1/t. When 3≥2h1/t≥0.9, no batteries experience electrolyte leakage, completely avoiding the electrolyte leakage problem of the battery. When 2h1/t<0.9 or 2h1/t≥3, a thicker tab or insulating adhesive is less conducive to sealing, an electrolyte leakage channel is likely to be formed in the third part 303 of the insulating adhesive 30, and it is also likely to cause voids in the sealing portion during sealing of non-tab regions, leading to insufficient sealing and electrolyte leakage.

Examples 24 and 25 and Comparative examples 12-14 differ from Example 1 in at least one of the thickness C2 of the second part of third insulating adhesive layer 33 in the second part 302 of the insulating adhesive 30 or the thickness C1 of the second part of third insulating adhesive layer 33 in the first part 301 of the insulating adhesive 30. Specific parameters and test results are shown in Table 3.

**Table 3**

| | C1 (µm) | C2 (µm) | Value of C2/C 1 | C1-C2 | F(N/mm) | Electrolyte leakage situation |
|---|---|---|---|---|---|---|
| Example 1 | 49.6 | 48.6 | 98% | 1 | 6.76 | 0/320 |
| Example 24 | 49.6 | 45.6 | 92% | 3 | 6.71 | 0/320 |
| Example 25 | 88 | 81 | 92% | 7 | 6.69 | 0/320 |
| Comparative example 12 | 49.6 | 39.6 | 79.8% | 10. | 5.47 | 5/320 |
| Comparative example 13 | 49.6 | 49.1 | 99% | 0.5 | 4.80 | 15/320 |
| Comparative example 14 | 88 | 79.3 | 90% | 8.7 | 4.80 | 15/320 |

From Table 3, it can be known that when 92%C1≤C2≤98%C1 and 7 µm≥C1-C2≥1 µm are satisfied, no batteries experience electrolyte leakage, completely avoiding the electrolyte leakage problem of the battery and further improving the sealing effect. When C2>98%C1 or 1 µm>C1-C2, the third insulating adhesive layer 33 cannot fuse with the sealing layer 401 due to an excessively low compression rate, reducing the sealing tensile force and causing electrolyte leakage. When C2<92%C1 or 7 µm<C1-C2, the insulating adhesive 30 over-melts, and an excessively small thickness leads to reduced sealing effect and increased frequency of electrolyte leakage.

Examples 26-30 and Comparative examples 15 and 16 differ from Example 1 in at least one of the thickness A1 of the first insulating adhesive layer 31, the thickness B1 of the second insulating adhesive layer 32, and the thickness C1 of the third insulating adhesive layer 33 in the first part 303 of the insulating adhesive 30, the thickness C2 of the second part of third insulating adhesive layer 33 in the second part 302 of the insulating adhesive 30, or the total thickness H of the second part of third insulating adhesive layer 33 in the second part 302 and the sealing layer 401. Specific parameters and test results are shown in Table 4.

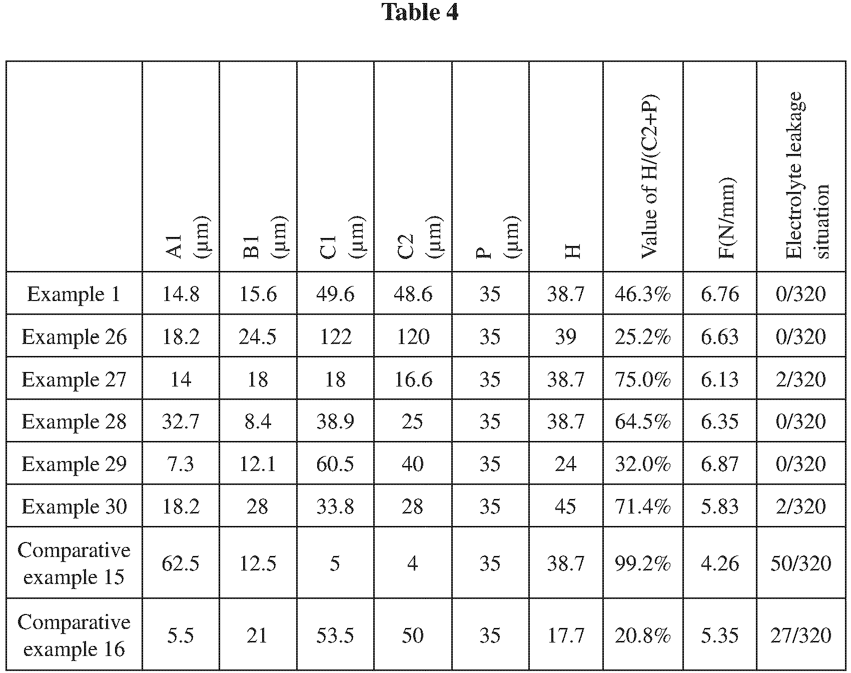

From Table 4, it can be known that when 0.25(C2+P)≤H≤0.75(C2+P) is satisfied, the sealing tensile force F is greater, and the number of batteries experiencing electrolyte leakage is reduced, alleviating the electrolyte leakage problem of the battery. When H/(C2+P)<0.25, the third insulating adhesive layer 33 and the sealing layer 401 have poor interfacial fusion due to an excessively low compression rate, reducing the sealing tensile force and causing electrolyte leakage. When H/(C2+P)>0.75, the third insulating adhesive layer 33 and the sealing layer 401 over-melt, and an excessively small thickness after heat melting leads to reduced sealing effect and increased frequency of electrolyte leakage.

Examples 31 and 32 and Comparative examples 17 and 18 differ from Example 1 in the thickness A2 of the second part of first insulating adhesive layer 31 in the second part 302. Specific parameters and test results are shown in Table 5.

**Table 5**

| | A1 (µm) | A2 (µm) | Al-A2 | F(N/mm) | Electrolyte leakage situation |
|---|---|---|---|---|---|
| Example 1 | 14.8 | 12 | 2.8 | 6.76 | 0/320 |
| Example 31 | 14.8 | 14.3 | 0.5 | 6.26 | 2/320 |
| Example 32 | 14.8 | 9.8 | 5 | 6.65 | 0/320 |
| Comparative example 17 | 14.8 | 14.6 | 0.2 | 4.85 | 12/320 |
| Comparative example 18 | 14.8 | 5.5 | 10.2 | *5.15* | 9/320 |

From Table 5, it can be known that when 5 µm≥A1-A2≥0.5 µm is satisfied, the sealing tensile force F is greater, and the number of batteries experiencing electrolyte leakage is reduced, alleviating the electrolyte leakage problem of the battery.

Examples 33 and 34 and Comparative examples 19 and 20 differ from Example 1 in the thickness B2 of the second part of second insulating adhesive layer 32 in the second part 302. Specific parameters and test results are shown in Table 6.

**Table 6**

| | B1 (µm) | B2 (µm) | B1-B2 | F(N/mm) | Electrolyte leakage situation |
|---|---|---|---|---|---|
| Example 1 | 15.6 | 14.8 | 0.8 | 6.76 | 0/320 |
| Example 33 | 15.6 | *15.5* | 0.1 | 5.95 | 2/320 |
| Example 34 | 15.6 | 12.7 | 2.9 | 6.63 | 0/320 |
| Comparative example 19 | 15.6 | 8.4 | 7.2 | 5.32 | 8/320 |
| Comparative example 20 | 15.6 | 6.4 | 9.2 | 4.93 | 10/320 |

From Table 6, it can be known that when 3 µm≥B1-B2≥0.1 µm is satisfied, the sealing tensile force F is greater, and the number of batteries experiencing electrolyte leakage is reduced, alleviating the electrolyte leakage problem of the battery.

Examples 35 and 36 and Comparative examples 21 and 22 differ from Example 1 in at least one of the thickness A1 of the first insulating adhesive layer 31, the thickness B1 of the second insulating adhesive layer 32, the thickness C1 of the third insulating adhesive layer 33 in the first part 303 of the insulating adhesive 30, the thickness G of the part of the tab assembly corresponding to the second part 302 of the insulating adhesive 30, or the thickness K of the part of the secondary battery 100 corresponding to the second part 302 and the tab 20. Specific parameters and test results are shown in Table 7.

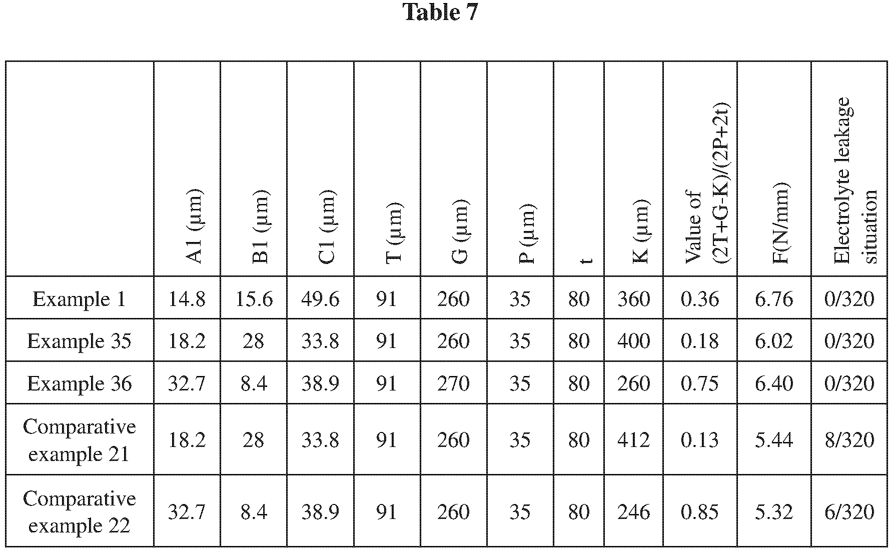

From Table 8, it can be known that when 2T+G-(2P+2t)×75%<K<2T+G-(2P+2t)×15% is satisfied, the sealing tensile force F is greater, and the number of batteries experiencing electrolyte leakage is reduced, alleviating the electrolyte leakage problem of the battery.

Examples 37-49 and Comparative examples 23-31 differ from Example 1 in at least one of the thickness h3 of the third part 301 of the insulating adhesive 30, the thickness A3 of the third part of first insulating adhesive layer 31, the thickness B3 of the third part of second insulating adhesive layer 32, or the thickness C3 of the third part of third insulating adhesive layer 33 in the third part 301. Specific parameters and test results are shown in Table 8.

**Table 8**

| | h3 | A3 | Value of A3/B3 | B3 | B3/h3 | C3 | C3/B3 | C3/A3 | F (N/mm) | Electrolyte leakage situation |
|---|---|---|---|---|---|---|---|---|---|---|
| Example 1 | 80 | 14.8 | 94.87% | 15.6 | 19.50% | 49.6 | 317.95% | 3.35 | 6.76 | 0/320 |
| Example 37 | 79.3 | 14.6 | 74.87% | 19.5 | 24.59% | 45.2 | 231.79% | 3.1 | 6.3 | 1/320 |
| Example 38 | 79.7 | 15 | 60.73% | 24.7 | 30.99% | 40 | 161.94% | 2.7 | 5.9 | 2/320 |
| Example 39 | 78 | 19 | 95.00% | 20 | 25.64% | 39 | 195.00% | 2.1 | 6.5 | 0/320 |
| Example 40 | 80 | 24 | 240.00% | 10. | 12.50% | 46 | 460.00% | 1.9 | 6.51 | 0/320 |
| Example 41 | 80 | 32 | 290.91% | 11 | 13.75% | 37 | 336.36% | 1.2 | 6.2 | 0/320 |
| Example 42 | 80 | 10.8 | 60.00% | 18 | 22.50% | 51.2 | 284.44% | 4.7 | 6.65 | 0/320 |
| Example 43 | 80 | 33.6 | 400.00% | 8.4 | 10.50% | 38 | 452.38% | 1.1 | 5.7 | 3/320 |
| Example 44 | 80 | 32.9 | 391.67% | 8.4 | 10.50% | 38.7 | 460.71% | 1.2 | 5.8 | 1/320 |
| Example 45 | 80 | 18.3 | 65.36% | 28 | 35.00% | 33.7 | 120.36% | 1.8 | 6.25 | 1/320 |
| Example 46 | 79.7 | 25.20 | 90.00% | 28 | 35.13% | 26.5 | 94.64% | 1.1 | 5.5 | 4/320 |
| Example 47 | 80 | 8 | 66.67% | 12 | 15.50% | 60 | *500%* | 8.3 | 5.75 | 4/320 |
| Example 48 | 80 | 29.9 | 249.17% | 12 | 15.00% | 38.1 | 317.50% | 1.3 | 6.3 | 1/320 |
| Example 49 | 80 | 29.6 | 328.89% | 9 | 11.25% | 41.4 | 460.00% | 1.4 | 6.33 | 0/320 |
| Comparative example 23 | 80 | 28 | 76.44% | 36.63 | 45.79% | 15.37 | 41.96% | 0.5 | 5.1 | 7/320 |
| Comparative example 24 | 80 | 29 | 145.00% | 20 | 25.00% | 31 | 155.00% | 1.1 | 5.45 | 5/320 |
| Comparative example 25 | 80 | 6.5 | 32.50% | 20 | 25.00% | 53.5 | 267.50% | 8.2 | 5.37 | 7/320 |
| Comparative example 26 | 80 | 7.6 | 34.55% | 22 | 27.50% | 50.4 | 229.09% | 6.6 | 5.3 | 6/320 |
| Comparative example 27 | 80 | 54 | 450.00% | 12 | 15.00% | 14 | 116.67% | 0.3 | 4.7 | 11/320 |
| Comparative example 28 | 80 | 18.6 | 290.63% | 6.4 | 8.00% | 55 | 859.38% | 3.0 | 4.8 | 10/320 |
| Comparative example 29 | 80 | 19.5 | 67.24% | 29 | 36.25% | 31.5 | 108.62% | 1.6 | 5.3 | 5/320 |
| Comparative example 30 | 80 | 62.5 | 543.48% | 11.5 | 14.38% | 6 | 52.17% | 0.1 | 4.3 | 45/320 |
| Comparative example 31 | 80 | 2.5 | 20.00% | 12.5 | 15.63% | 65 | 520.00% | 26.0 | 4.5 | 40/320 |

Based on comparison between Examples 30-43 and Comparative examples 22-30, it can be known that when the insulating adhesive 30 simultaneously satisfies 10.5%h3≤B3≤35%h3, 90%B3≤C3≤500%B3, C3>A3, and 60%B3≤A3≤400%B3, the sealing tensile force F is greater than or equal to 5.5 N/mm, and the electrolyte leakage situation of the battery is reduced.

Examples 50-62 and Comparative examples 32-40 differ from Example 1 in at least one of the thickness Q of the bonding region 201 of the tab assembly, the thickness D of the bonding region first insulating adhesive bonding layer, the thickness B4 of the bonding region second insulating adhesive layer 32, or the thickness C4 of the bonding region third insulating adhesive layer 33. Specific parameters and test results are shown in Table 9.

**Table 9**

| | Q | D | D/B4 | B4 | B4/0.5Q | C4 | C4/B4 | C4/0.5D | F(N/mm) | Electrolyte leakage situation |
|---|---|---|---|---|---|---|---|---|---|---|
| Example 1 | 160 | 29.6 | 189.74% | 15.6 | 19.50% | 49.6 | 317.95% | 3.4 | 6.76 | 0/320 |
| Example 50 | 159.4 | 30 | 152.28% | 19.7 | 24.72% | 45 | 228.43% | 3 | 6.35 | 1/320 |
| Example 51 | 160.4 | 30 | 121.46% | 24.7 | 30.80% | 40.5 | 163.97% | 2.7 | 5.85 | 2/320 |
| Example 52 | 160 | 44 | 209.52% | 21 | 26.25% | 37 | 176.19% | 1.7 | 6.4 | 0/320 |
| Example 53 | 160 | 50 | 500.00% | 10. | 12.50% | 45 | 450.00% | 1.8 | 6.41 | 0/320 |
| Example 54 | 160 | 60 | 428.57% | 14 | 17.50% | 36 | 257.14% | 1.2 | 6.3 | 0/320 |
| Example 55 | 160 | 21.6 | 120.00% | 18 | 22.50% | 51.2 | 284.44% | 4.7 | 6.55 | 0/320 |
| Example 56 | 160 | 67.2 | 800.00% | 8.4 | 10.50% | 38 | 452.38% | 1.1 | 5.75 | 3/320 |
| Example 57 | 160 | 64 | 711.11% | 9 | 11.25% | 39 | 433.33% | 1.2 | 5.88 | 1/320 |
| Example 58 | 170 | 36 | 128.57% | 28 | 32.94% | 39 | 139.29% | 2.2 | 6.2 | 1/320 |
| Example 59 | 160 | 50.4 | 175.00% | 28.8 | 36.00% | 26 | 90.28% | 1 | 5.5 | 4/320 |
| Example 60 | 160 | 16 | 133.33% | 12 | 15.00% | 60 | 500.00% | 7.5 | 5.5 | 4/320 |
| Example 61 | 160 | 59.4 | 495.00% | 12 | 15.00% | 38.3 | 319.17% | 1.3 | 6.2 | 1/320 |
| Example 62 | 160 | 59 | 655.56% | 9 | 11.25% | 41.5 | 461.11 % | 1.4 | 6.23 | 0/320 |
| Comparative example 32 | 160 | 58 | 160.22% | 36.2 | 45.25% | 14.8 | 40.88% | 0.5 | 5.1 | 7/320 |
| Comparative example 33 | 160 | 58 | 276.19% | 21 | 26.25% | 30 | 142.86% | 1 | 5.45 | 5/320 |
| Comparative example 34 | 160 | 13 | 59.09% | 22 | 27.50% | *51.5* | 234.09% | 7.9 | 5.4 | 7/320 |
| Comparative example 35 | 160 | 15.2 | 69.09% | 22 | 27.50% | 50.4 | 229.09% | 6.6 | 5.3 | 8/320 |
| Comparative example 36 | 160 | 106 | 815.38% | 13 | 16.25% | 14 | 107.69% | 0.3 | 4.6 | 11/320 |
| Comparative example 37 | 160 | 35.2 | 475.68% | 7.4 | 9.25% | 55 | 743.24% | 3.1 | 4.8 | 10/320 |
| Comparative example 38 | 160 | 39 | 134.48% | 29 | 36.25% | 31.5 | 108.62% | 1.6 | 5.2 | 5/320 |
| Comparative example 39 | 160 | 127 | 1209.52% | 10.5 | 13.13% | 6 | 57.14% | 0.1 | 4.3 | 45/320 |
| Comparative example 40 | 160 | 5 | 40.00% | 12.5 | 15.63% | 65 | 520.00% | 26 | 4.4 | 40/320 |

From Table 9, it can be known that when 10.5%(Q×0.5)≤B4≤35%(Q×0.5), C4>0.5D, 90%B4≤C4≤500%B4, and 120%B4≤D≤800%B4 are satisfied simultaneously, the sealing tensile force F is greater than or equal to 5.5 N/mm, and the electrolyte leakage situation of the battery is reduced.

Examples 63-68 and Comparative examples 41 and 42 differ from Example 1 in materials of the first insulating adhesive layer 31, the second insulating adhesive layer 32, and the third insulating adhesive layer 33. Specific parameters and test results are shown in Table 10.

**Table 10**

| | | Example 1 | Example 63 | Example 64 | Example 65 | Example 66 | Example 67 | Example 68 | Comparative example 41 | Comparative example 42 |
|---|---|---|---|---|---|---|---|---|---|---|
| First insulating adhesive layer | PP | 100% | 100% | 100% | 100% | 100% | 100% | 95% | 100% | 100% |
| | ERP | | | | | | | 5% | | 12% |
| | UHMWPE | | | | | | | | 2% | |
| | Melting point (°C) | 123 | 123 | 123 | 123 | 123 | 123 | 110 | 105 | 98 |
| Second insulating adhesive layer | PP | 100% | 100% | 100% | 100% | 100% | 100% | 100% | 100% | 100% |
| | Melting point (°C) | 145 | 145 | 145 | 145 | 145 | 145 | 145 | 145 | 145 |
| Third insulating adhesive layer | PP | 95% | 97% | 90% | 97% | 90% | 100% | 100% | 98% | |
| | ERP | | 3% | 10% | | | | | | 12% |
| | UHMWPE | 5% | | | 3% | 10% | | | 2% | |
| | Melting point (°C) | 120 | 121 | 119 | 121 | 115 | 123 | 123 | 122 | 98 |
| F(N/mm) | | 6.76 | 6.40 | 6.30 | 6.53 | 6.22 | 6.20 | 6.20 | 5.35 | 3.10 |
| Electrolyte leakage situation | | 0/320 | 1/320 | 1/320 | 0/320 | 1/320 | 0/320 | 0/320 | 6/320 | 50/320 |

From Table 10, it can be known that when a percentage of the toughening modifier added in the third adhesive layer 33 is 3%-10%, the sealing tensile force F reaches 6.22 N/mm, and the number of batteries experiencing electrolyte leakage is reduced, alleviating the electrolyte leakage problem of the battery. When the percentage of the toughening modifier added in the first insulating adhesive layer 31 is 3%-10%, the number of batteries experiencing electrolyte leakage is reduced, alleviating the electrolyte leakage problem of the battery. When the percentage of the toughening modifier added is not within the range of 3%-10%, the number of batteries experiencing electrolyte leakage increases, increasing the possibility of electrolyte leakage of the battery.

The descriptions disclosed above are merely preferred embodiments of this application, and certainly cannot constitute any limitation on this application. Accordingly, equivalent changes made in accordance with this application still fall within the scope of this application.

## Claims

1. A secondary battery, comprising an electrode assembly, a tab assembly, and a packaging pouch, wherein the electrode assembly is accommodated in the packaging pouch, the packaging pouch comprises a sealing portion, the tab assembly comprises tab and insulating adhesives respectively disposed on two sides of each tab, the tab are connected to the electrode assembly and run through the sealing portion to extend out of the packaging pouch, and the insulating adhesive connect the tab and the packaging pouch, wherein the insulating adhesive comprises a first insulating adhesive layer, a second insulating adhesive layer, and a third insulating adhesive layer sequentially stacked in a first direction, wherein the first insulating adhesive layer is connected to the tab, and the third insulating adhesive layer is connected to the packaging pouch; and in a second direction perpendicular to the first direction, the insulating adhesive comprises a first part, wherein the first part is a region at which the insulating adhesive overlaps the tab in the first direction and is not overlap the sealing portion, the first part comprises a first end portion, and the first end portion is located in the packaging pouch, wherein in the first end portion, in the first direction, a thickness of the insulating adhesive is h1, a thickness of the first insulating adhesive layer is A1, a thickness of the second insulating adhesive layer is B1, and a thickness of the third insulating adhesive layer is C1, wherein 10.5%h1≤B1≤35%h1, C1>A1, 90%B1≤C1≤500%B1, and 60%B1≤A1≤400%B1.

2. The secondary battery according to claim 1, wherein 8.18A1≥C1≥1.05A1.

3. The secondary battery according to claim 1, wherein 7A1≥C1≥1.3A1.

4. The secondary battery according to claim 1, wherein a thickness of the tab in the first direction is t, wherein 3t≥2h1≥0.9t.

5. The secondary battery according to claim 1, wherein in the second direction, the insulating adhesive further comprises a second part; the second part is a region at which the insulating adhesive overlaps the sealing portion in the first direction; in the second part, the insulating adhesive comprises a second part of first insulating adhesive layer, a second part of second insulating adhesive layer, and a second part of third insulating adhesive layer sequentially stacked in the first direction; and in the first direction, thicknesses of the second part of first insulating adhesive layer, the second part of second insulating adhesive layer, and the second part of third insulating adhesive layer are A2, B2, and C2, respectively.

6. The secondary battery according to claim 5, wherein 92%C1≤C2≤98%C1.

7. The secondary battery according to claim 5, wherein 7 µm≥C1-C2≥1 µm.

8. The secondary battery according to claim 5, wherein the packaging pouch comprises a sealing layer connected to the third insulating adhesive layer, and a thickness of the sealing layer in the first direction is P; and in the second part, a total thickness of the second part of third insulating adhesive layer and the sealing layer in the first direction is H, wherein 0.25(C2+P)≤H≤0.75(C2+P).

9. The secondary battery according to claim 8, wherein 0.4(C2+P)≤H≤0.7(C2+P).

10. The secondary battery according to claim 5, wherein A1 and A2 satisfy the following formula: 5 µm≥A1-A2≥0.5 µm.

11. The secondary battery according to claim 5, wherein 3 µm≥B1-B2≥0.1 µm.

12. The secondary battery according to claim 5, wherein the packaging pouch comprises a sealing layer connected to the third insulating adhesive layer, and in the first direction, a thickness of the packaging pouch is T and a thickness of the sealing layer is P; and in the first direction, a thickness of a part of the tab assembly corresponding to the second part is G and a thickness of a part of the secondary battery corresponding to the second part and the tab is K, wherein 2T+G-(2P+2t)×75%<K<2T+G-(2P+2t)×15%.

13. The secondary battery according to claim 1, wherein in the second direction, the insulating adhesive further comprises a third part; the third part is a region at which the insulating adhesive does not overlap the sealing portion or the tab in the first direction; in the third part, in the first direction, the insulating adhesive comprises a third part of first insulating adhesive layer, a third part of second insulating adhesive layer, and a third part of third insulating adhesive layer sequentially stacked in the first direction; and a thickness of the insulating adhesive is h3, a thickness of the first insulating adhesive layer is A3, a thickness of the second insulating adhesive layer is B3, and a thickness of the third insulating adhesive layer is C3, wherein 10.5%h3≤B3≤35%h3, C3>A3, 90%B3≤C3≤500%B3, and 60%B3≤A3≤400%B3.

14. The secondary battery according to claim 1, wherein the tab assembly comprises a bonding region, and the bonding region is a part at which the insulating adhesives on two sides of the tab adhere to each other in the first direction; and in the first direction, the bonding region comprises a first insulating adhesive bonding layer, a bonding region second insulating adhesive layer, and a bonding region third insulating adhesive layer, a thickness of the bonding region is Q, a thickness of the first insulating adhesive bonding layer is D, a thickness of the bonding region second insulating adhesive layer is B4, and a thickness of the bonding region third insulating adhesive layer is C4, wherein 10.5%(Q×0.5)≤B4≤35%(Q×0.5), C4>0.5D, 90%B4≤C4≤500%B4, and 120%B4≤D≤800%B4.

15. The secondary battery according to claim 1, wherein melting points of the first insulating adhesive layer and the third insulating adhesive layer are 100-140°C, and a melting point of the second insulating adhesive layer is 140-200°C.

16. The secondary battery according to claim 1, wherein the first insulating adhesive layer, the second insulating adhesive layer, and the third insulating adhesive layer each comprise one or more of polypropylene, polyethylene, poly(vinylidene difluoride), vinylidene fluoride-hexafluoropropylene copolymer, polymethyl methacrylate, or polyethylene glycol.

17. The secondary battery according to claim 16, wherein the first insulating adhesive layer and/or the third insulating adhesive layer further comprises a toughening modifier.

18. The secondary battery according to claim 17, wherein the toughening modifier comprises one or more of ethylene propylene rubber, ethylene propylene diene monomer rubber, styrene-butadiene rubber, low-density polyethylene, ethylene-vinyl acetate copolymer, linear low-density polyethylene, nylon, polyethylene terephthalate, polycarbonate, or ultra-high-molecular-weight polyethylene.

19. The secondary battery according to claim 17, wherein based on a total mass of the first insulating adhesive layer, a percentage of the toughening modifier is 3%-10%; and/or based on a total mass of the third insulating adhesive layer, a percentage of the toughening modifier is 3%-10%.

20. The secondary battery according to claim 1, wherein h1 is 30-160 µm.

21. An electronic apparatus, comprising the secondary battery according to any one of claims 1 to 20.
